# EUROPEAN PATENT SPECIFICATION

(11) **EP 2 390 138 B1**
(45) Date of publication and mention of the grant of the patent: **19.11.2014**
(21) Application number: 11167150.9
(22) Date of filing: 23.05.2011
(51) Int. Cl.: B60Q 1/30

(54) **Device for a trailer**
Vorrichtung für einen Anhänger
Dispositif pour remorque

(30) Priority: 25.05.2010 SE 1000559
(43) Date of publication of application: 30.11.2011
(73) Proprietor: TE-LS Sweden AB, 686 93 Sunne (SE)
(72) Inventor: Filipsson, Peter, 686 93 Sunne (SE); Kristoffersson, Anders, 685 94 Torsby (SE)
(74) Representative: Andrén, Bertil

(56) References cited:
- DE-U1- 20 314 352
- US-A- 2 046 976
- US-B1- 7 601 007

## Description

The present invention relates to a device for controlling a plurality of light signal devices of a trailer, said light signal devices being capable of taking a first state where they are current supplied by an electrical system of a towing vehicle, as well as a second state where they are current supplied by a voltage source of the trailer, wherein each light signal device can have either an active status or an inactive status, the trailer comprises an external supply circuit which, in the first state, connects the respective light signal device to the electrical system of the towing vehicle.

As used herein, trailer refers to a vehicle for road traffic, such as e.g. a semi-trailer or a drawbar trailer, said trailer being intended to be mechanically connected to and be pulled by a towing vehicle such as e.g. a truck. The trailer has an electrical system, which comprises light signal devices for making the trailer visible in the traffic. The electrical system of the trailer is intended to be electrically connected to the electrical system of a towing vehicle, wherein the electrical system of the towing vehicle supplies current to and controls the light signal devices. Each light signal device comprises at least one light-producing means, such as e.g. a bulb or a LED lamp. The light signal device can, for example, be constituted by a rear lamp, a flasher lamp, a position lamp, a parking lamp, a fog lamp or a brake lamp.

It can happen that the trailer must be disconnected, mechanically and electrically, from the towing vehicle and be parked along the side of a busy road. Since a light signal device is normally only supplied with current from the electrical system of the towing vehicle, the light signal device will not be illuminated after disconnecting the trailer from the towing vehicle. This implies that the trailer is less visible after the disconnection and that the trailer therefore may pose a danger for other road users on the road.

US 2006/0255921 A1 discloses a system where warning lights and/ or brake lights are activated in the event of an electrical disconnection of the trailer. After the disconnection, the current is obtained from a separate battery in the trailer.

US 2,046,976 discloses a system according to the preamble of claim 1, where the warning lights of a trailer are activated, should the trailer become detached from the towing vehicle when driving.

EP 1 018 453 A2 discloses another system, where the warning lights of the trailer are activated in the event of electrical disconnection from the trailer socket of a towing vehicle.

These systems have in common that it is predetermined which of the light signal devices of the trailer will be activated after disconnecting the trailer from the towing vehicle. This is a problem, however, since such systems are not flexible.

The object of the present invention is to at least reduce this problem, and to produce a device for connection to the electrical system of a trailer, said device increasing the safety when parking the trailer along the side of a busy road.

The device according to the invention is characterized in that the device comprises
- a control circuit for each light signal device which control circuit comprises:
- an internal supply circuit which, in the second state, connects the light signal device to the voltage source of the trailer when the signal device has an active status,
- a status circuit comprising a first relay, which keeps the internal supply circuit broken at the first relay in the first state and keeps the internal supply circuit closed at the first relay in the second state, and
- a hold circuit comprising a second relay, which keeps the internal supply circuit closed at the second relay when the light signal device is active and keeps the internal supply circuit broken at the second relay when the light signal device is inactive, such that each control circuit is adapted to detect the status of the light signal device in the first state and to maintain the status of the light signal device when the light signal device transitions from the first state to the second state.

In the following, the invention will be described more closely with reference to accompanying drawings.
Figure 1 shows a circuit diagram of a light signal device of a trailer, wherein the light signal device is activated and controlled in a first state.
Figure 2 shows the light signal device of Figure 1, wherein the light signal device is activated and controlled in a second state.
Figure 3 shows a circuit diagram of a light signal device of a trailer, wherein the light signal device is deactivated and controlled in a first state.
Figure 4 shows the light signal device of Figure 3, wherein the light signal device is deactivated and controlled in a second state.
Figure 5 shows a circuit diagram of a flashing light signal device of a trailer, wherein the light signal device is activated and controlled in a first state.
Figure 6 shows the flashing light signal device of Figure 5, wherein the light signal device is activated and controlled in a second state.
Figure 7 shows a circuit diagram of a light signal device and a flashing light signal device of a trailer, wherein the light signal devices are activated and controlled in a first state.
Figure 8 shows the light signal devices of Figure 7, wherein the light signal devices are activated and controlled in a second state.
Figure 9 shows a circuit diagram of an inactive light signal device and an active, flashing light signal device of a trailer, wherein the light signal devices are controlled in a first state.
Figure 10 shows the light signal devices of Figure 9, wherein both the inactive light signal device and the active, flashing light signal device are controlled in a second state.

The drawings 1 to 10 show different parts and embodiments of a device for connection to the electrical system of a trailer, said electrical system comprising a plurality of light signal devices 5, 6 and a multi-pole socket 1 for connecting the light signal devices 5, 6 to the electrical system of a towing vehicle. The device comprises a control circuit for each light signal device 5, 6, wherein the respective control circuit maintains the status of the light signal device 5, 6 in the event of an electrical disconnection from the electrical system of the towing vehicle.

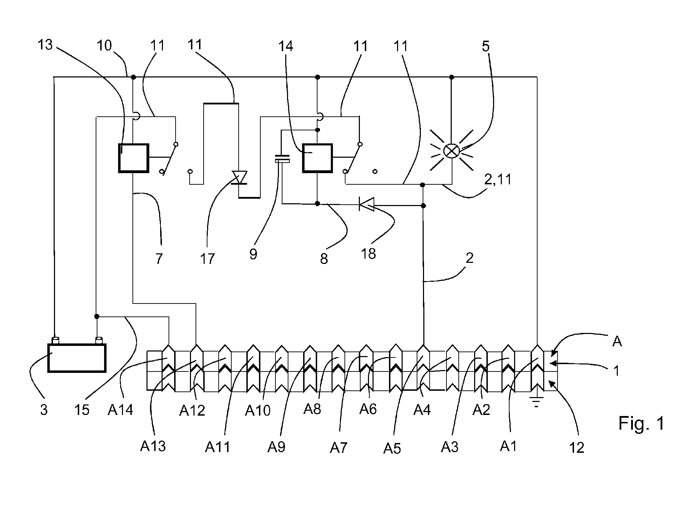

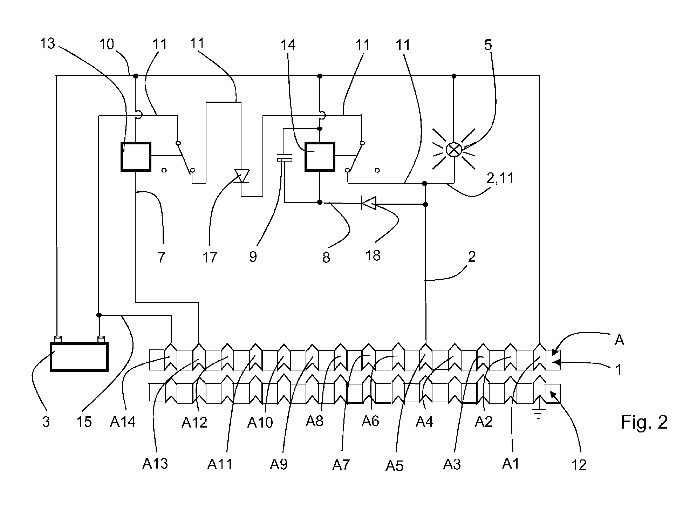

Each signal device 5, 6 can either have an active status where the light signal device 5, 6 is illuminated, or an inactive status where the light signal device 5, 6 is switched off. The status of the light signal device 5, 6 is either controlled in a first state, according to Figure 1, 3, 5, 7 and 9, where the electrical system of the trailer is connected to the electrical system of the towing vehicle so that the electrical system of the towing vehicle controls the status of the light signal device 5, 6, or in a second state, according to Figure 2, 4, 6, 8 and 10, where the electrical system of the trailer is disconnected from the electrical system of the towing vehicle and only the control circuit is electrically connected to the electrical system of the trailer so that the control circuit controls the status of the light signal device 5, 6.

A single individual light signal device 5, 6 will be described in the following, wherein the light signal device 5, 6 is in the first or the second state and wherein the light signal device 5, 6 has an active or an inactive status. It should be pointed out, however, that a trailer comprises a plurality of such light signal devices 5, 6, wherein at least one subset of these light signal devices 5, 6 may have an active status and one subset may have an inactive status. By means of the invention, it is achieved that the individual status of each light signal device 5, 6 is maintained in the event of a transition from the first state to the second state.

Furthermore, the electrical system of the trailer comprises an external supply circuit 2, 2' for supplying current from the electrical system of the towing vehicle via the socket 1 to the light signal device 5, 6, a voltage source 3 of the trailer for supplying current to the light signal device 5, 6 in the second state, a grounded electrical circuit 10 for connecting the negative pole of the voltage source 3 to a grounding point in the towing vehicle, and a charging circuit 15 for charging the current source 3 from the electrical system of the towing vehicle.

The control circuit for each light signal device 5, 6 comprises an internal supply circuit 11, 11' for supplying current from the voltage source 3 to the light signal device 5, 6 in the second state, a status circuit 7 for keeping the internal supply circuit 11, 11' broken in the first state and for keeping the internal supply circuit 11, 11' closed in the second state, and a hold circuit 8, 8' for maintaining the status of the light signal device 5, 6 in the event of a transition from the first state to the second state.

The multi-pole socket 1 comprises a group of contact poles A, comprising fourteen contact poles A1-A14, to which components of the electrical system of the trailer and the control circuit of the device are electrically connected. The socket 1 is intended to be connected to a multi-pole plug 12 of a connecting cable (not shown), for connection of the electrical system of the trailer to the electrical system of a towing vehicle via the connecting cable.

As has been mentioned previously, the light signal device 5, 6 can have either an active status where the light signal device 5, 6 is illuminated, or an inactive status where the light signal device 5, 6 is switched off. The status of the light signal device 5, 6 is either controlled in a first state, according to Figure 1, 3, 5, 7 and 9, where the plug 12 is connected to the socket 1 so that the electrical system of the towing vehicle controls the status of the light signal device 5, 6, or in a second state, according to Figure 2, 4, 6, 8 and 10, where the plug 12 is disconnected from the socket 1 and only the control circuit is electrically connected to the electrical system of the trailer so that the control circuit controls the status of the light signal device 5, 6.

In case the light signal device 5, 6 is active in the first state, a current flows through the external supply circuit 2, 2'. The external supply circuit 2, 2' connects the light signal device 5, 6 to a contact pole A4, A2 of the socket 1.

The voltage source 3 of the trailer is intended to supply current to the light signal device 5, 6 when the light signal device 5, 6 is controlled in the second state. The voltage source 3 of the trailer has an operational voltage between 5-50 V and can comprise one or several batteries. The internal voltage source 3 of the trailer refers herein to that the voltage source 3 can be arranged either on the trailer or beside the trailer.

Via the grounded electrical circuit 10, the first contact pole A1 of the socket 1 is electrically connected to the negative pole of the voltage source 3, and is connected to ground of the electrical system of the towing vehicle in the first state.

Via the external supply circuit 2', the second contact pole A2 is electrically connected to the left flasher lamp of the trailer, light signal device 6, and is connected to the left flasher function of the electrical system of the towing vehicle in the first state.

Via an external supply circuit, the third contact pole A3 is electrically connected to the right flasher lamp (not shown) of the trailer, and is connected to the right flasher function of the electrical system of the towing vehicle in the first state.

Via an external supply circuit, the fourth contact pole A4 is electrically connected to the brake light lamps (not shown) of the trailer, and is connected to a braking function of the electrical system of the towing vehicle in the first state.

Via the external supply circuit, the fifth contact pole A5 is electrically connected to the left position lamp of the trailer, light signal device 5, and is connected to the left position light function of the electrical system of the towing vehicle in the first state.

Via an external supply circuit, the sixth contact pole A6 is electrically connected to the right position lamp (not shown) of the trailer, and is connected to the right position function of the electrical system of the towing vehicle in the first state.

Via an external supply circuit, the seventh contact pole A7 is electrically connected to the reversing lights (not shown) of the trailer, and is connected to the reversing light function of the electrical system of the towing vehicle in the first state.

Via an external supply circuit, the eighth contact pole A8 is electrically connected to the fog lights (not shown) of the trailer, and is intended to be connected to a fog light function of the electrical system of the towing vehicle via the multi-pole connecting cable.

The ninth contact pole A9 to the twelfth contact pole A12 are unused.

Via the status circuit 7, the thirteenth contact pole A13 is electrically connected to a first relay 13 in the control circuit of the device, and is connected to a battery of the electrical system of the towing vehicle in the first state.

Via the charging circuit 15, the fourteenth contact pole A14 is electrically connected to a positive pole of the voltage source 3 of the trailer for charging the voltage source 3, and is connected to a charging generator of the electrical system of the towing vehicle in the first state.

The control circuit of the device is adapted to detect the individual status of each light signal device 5, 6 in the first state, as well as to maintain the individual status of the light signal device 5, 6 in the event of a transition from the first state to the second state. In Figures 1-10, the function of the control circuit is shown in a number of different embodiments.

In case the light signal device 5, 6 is active and in the second state, a current flows through the internal supply circuit 11, 11'. The internal supply circuit 11, 11' connects electrically to the positive pole of the voltage source 3 with the light signal device 5, 6 and comprises a first blocking diode 17, 17', which sees to that no current can flow through the internal supply circuit 11, 11', in the backward direction, toward the voltage source 3.

The status circuit 7 comprises a first relay 13, which keeps the internal supply circuit 11, 11' broken in the first state and closes the internal supply circuit 11, 11' when transitioning from the first state to the second state. In the first state, according to Figure 1, 3, 5, 7 and 9, the internal supply circuit 11, 11' is broken at the first relay 13, since the current that now flows through the status circuit 7, from the battery of the towing vehicle, keeps the first relay 13 in an open position. In the second state, according to Figure 2, 4, 6, 8 and 10, the internal supply circuit 11, 11' is closed at the first relay 13, since no current flows through the status circuit 7 the first relay 13 will be kept in a closed position.

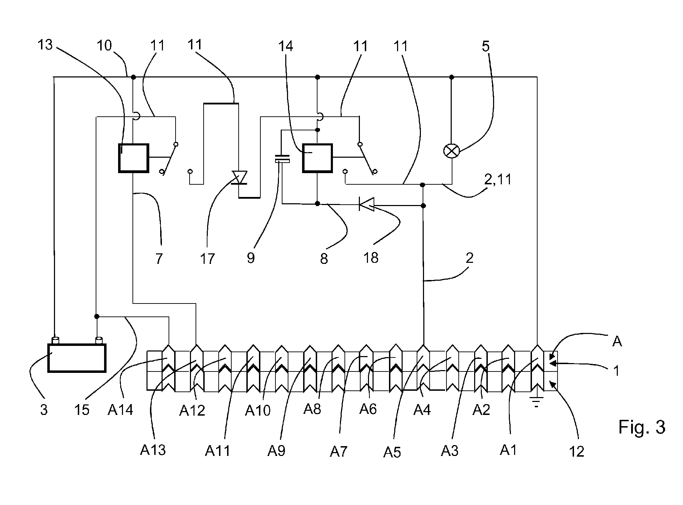

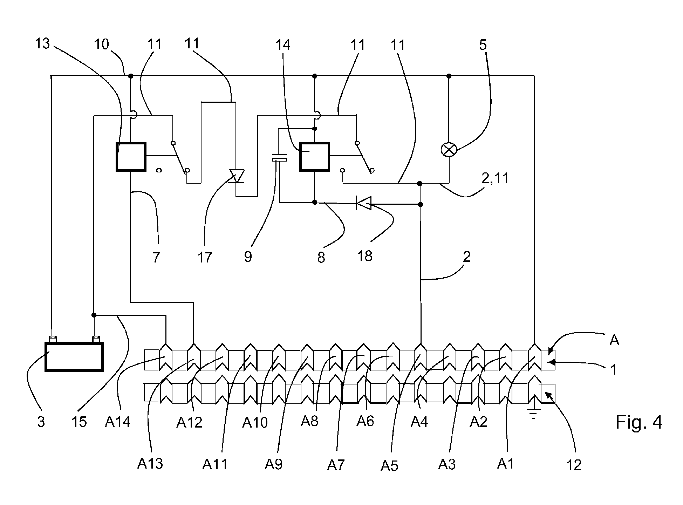

The hold circuit 8, 8' is arranged in parallel with the light signal device 5, 6. The hold circuit 8, 8' comprises a second relay 14, 14'. When the light signal device 5, 6 is active, a current flows through the hold circuit 8, 8', which causes the second relay 14, 14' to keep the internal supply circuit 11, 11' closed, which is shown in Figure 1, 2, 5, 6, 7 and 8. When the light signal device 5, 6 is inactive, no current flows through the hold circuit 8, 8', which causes the second relay 14, 14' to keep the internal supply circuit 11 broken, which is shown in Figure 3 and 4.

Furthermore, the hold circuit 8, 8' comprises a second blocking diode 18, 18', which sees to that no current can flow through the hold circuit 8, 8' in the backward direction toward the light signal device 5, 6.

The hold circuit 8, 8' further comprises a capacitor 9, 9', which is connected in parallel with the second relay 14, 14'. When the light signal device 5, 6 is active in the first state, according to Figure 1, 5 and 7, the capacitor 9, 9' is charged up by the current in the hold circuit 8, 8' from the electrical system of the towing vehicle.

In the event that the electrical system of the towing vehicle is disconnected from the electrical system of the trailer, the active light signal device 5, 6 will transition from the first state, where the light signal device is supplied with current from the electrical system of the towing vehicle, to the second state, according to Figure 2, 6 and 8, where the light signal device 5, 6 is supplied with current from the current source 3.

When transitioning from the first state to the second state, the capacitor 9, 9' that has been charged up in the first state will maintain a voltage across the second relay 14, 14' for a time interval, so that the second relay 14, 14' maintains the internal supply circuit 11, 11' closed, until a current is caused to flow through the hold circuit 8, 8' from the voltage source 3 via the internal supply circuit 11, 11'.

The current from the voltage source 3 of the trailer, which now flows in the hold circuit 8, 8', causes the second relay 14, 14' to be kept pulled, so that the internal supply circuit 11, 11' will be closed also in the second state.

This implies that the active status of the light signal device 5, 6 will be maintained in the event of a transition from the first state to the second state.

Below follows a number of different embodiments of a light signal device 5 with a steady light, and a light signal device 6 with a flashing light. In the embodiments, the light signal devices 5, 6 are shown in the first state, as well as in the second state after a transition from the first state.

Figure 1 shows the left position lamp 5 in the first state, wherein the status of the left position lamp 5 is active, i.e. it is illuminated with a steady light. The plug 12 is connected to the socket 1 and a current flows from the electrical system of the towing vehicle to the fifth contact pole A5, and on to the left position lamp 5 via the external supply circuit 2.

The first relay 13 keeps the internal supply circuit 11 broken, since a current flows through the status circuit 7 from the battery of the towing vehicle via the thirteenth contact pole A13, said current keeping the first relay 13 in a pulled, open position.

The second relay 14 keeps the internal supply circuit 11 closed, since a current flows through the hold circuit 8 from the electrical system of the towing vehicle via the fifth contact pole A5, said current keeping the second relay 14 in a closed position.

The capacitor 9 is charged up by the current flowing through the hold circuit 8.

Accordingly, no current flows through the internal supply circuit 11, since the internal supply circuit 11 is broken at the first relay 13.

Figure 2 shows the left position lamp 5, according to Figure 1, after a transition to the second state, wherein the active status of the left position lamp 5 has been maintained in the transition.

Here, the plug 12 has been disconnected from the socket 1, so that no current flows any longer from the electrical system of the towing vehicle to the contact poles A1-A14 of the socket 1. Since no current flows any longer through the status circuit 7, the first relay 13 has been closed and a current now flows from the voltage source 3, through the internal supply circuit 11, to the left position lamp 5 and supplies the left position lamp 5 with current. Furthermore, the voltage source 3 passes current on to the hold circuit 8.

When transitioning from the first state to the second state, the capacitor 9 has kept the second relay 14 pulled, so that the internal supply circuit 11 has been kept closed during the entire transition.

The current that now flows through the hold circuit 8 from the voltage source 3 keeps the second relay 14 pulled, so that the internal supply circuit 11 is closed.

This implies that the active status of the left position lamp 5 has been maintained in the transition from the first state to the second state.

Figure 3 shows the left position lamp 5 in the first state, wherein the status of the left position lamp 5 is inactive, i.e. it is switched off. The plug 12 is connected to the socket 1, but no current flows from the electrical system of the towing vehicle to the fifth contact pole A5 and the left position lamp 5.

The first relay 13 keeps the internal supply circuit 11 broken, since a current flows through the status circuit 7 from the battery of the towing vehicle via the thirteenth contact pole A13, said current keeping the first relay 13 in a pulled, open position.

The second relay 14 keeps the internal supply circuit 11 broken, since no current flows through the hold circuit 8 from the electrical system of the towing vehicle when the status of the left position lamp 5 is inactive, which causes the second relay 14 to be kept in an open position.

The capacitor 9 is not charged up, since no current flows through the hold circuit 8.

Figure 4 shows the left position lamp 5, according to Figure 3, after a transition to the second state, wherein the inactive status of the left position lamp 5 has been maintained in the transition.

Here, the plug 12 has been disconnected from the socket 1 so that no current flows any longer from the electrical system of the towing vehicle to the contact poles A1-A14 of the trailer. Since no current flows any longer through the status circuit 7, the first relay 13 has been closed.

The second relay 14 still keeps the internal supply circuit 11 broken, in the second state, since the capacitor 9 has not been charged up in the first state it cannot produce any voltage across the second relay 14 when transitioning from the first state to the second state.

This implies that the inactive status of the left position lamp 5 has been maintained in the transition from the first state to the second state.

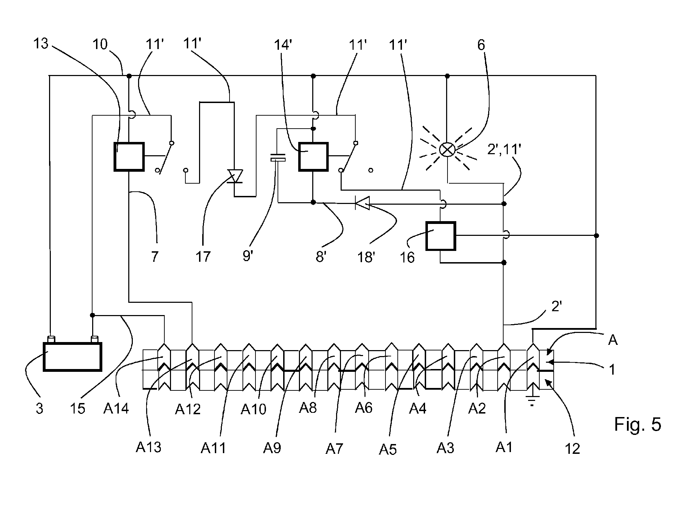

Figure 5 shows the left flasher lamp 6 in the first state, wherein the status of the left flasher lamp 6 is active, i.e. it is flashing with a flashing light. The plug 12 is connected to the socket 1 and a pulsating current flows from the electrical system of the towing vehicle to the second contact pole A2, and on to the left flasher lamp 6 via the external supply circuit 2'.

The first relay 13 keeps the internal supply circuit 11' broken, since a current flows through the status circuit 7 from the battery of the towing vehicle via the thirteenth contact pole A13, said current keeping the first relay 13 in a pulled, open position.

The second relay 14' keeps the internal supply circuit 11' closed, since a pulsating current flows through the hold circuit 8' from the electrical system of the towing vehicle via the second contact pole A2, said pulsating current together with the capacitor 9' keeping the second relay 14' in a pulled, closed position. The capacitor 9' is charged up by the pulsating current and sees to that the second relay 14' is pulled also between the current pulses. Between the current pulses, the capacitor 9' maintains a voltage across the second relay 14' so that the second relay 14' cannot break the internal supply circuit 11' between the current pulses. It is therefore necessary that the capacitor 9' is adapted to be capable of maintaining a voltage across the second relay 14' for a period of time at least as great as the time between two successive current pulses.

Accordingly, no current flows through the internal supply circuit 11, since it is broken at the first relay 13.

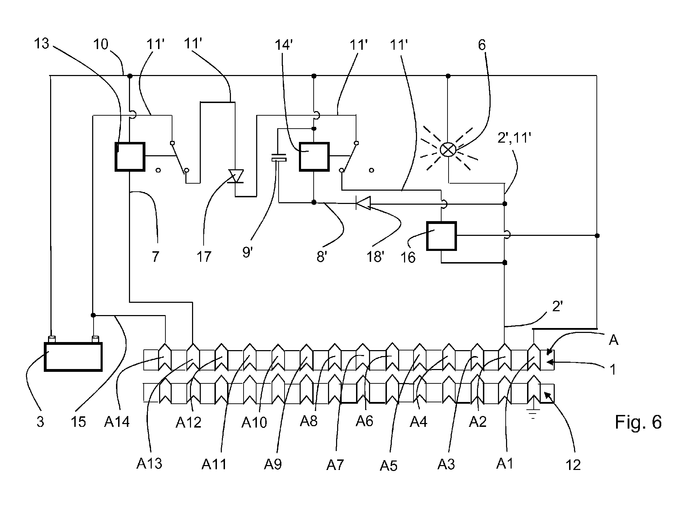

Figure 6 shows the left flasher lamp 6 according to Figure 5 after a transition to the second state, wherein the active status of the left flasher lamp 6 has been maintained in the transition.

Here, the plug 12 has been disconnected from the socket 1 so that no current flows any longer from the electrical system of the towing vehicle to the contact poles A1-A14 of the socket 1. Since no current flows any longer through the status circuit 7, the first relay 13 has been closed and a current now flows from the voltage source 3, through the internal supply circuit 11', to the left flasher lamp 6 and supplies the flasher lamp 6 with a pulsating current. The pulsating current is produced with a flashing relay 16, which is arranged in the internal supply circuit 11'. The current after the flashing relay 16 is pulsating to the hold circuit 8'.

When transitioning from the first state to the second state, the capacitor 9' has kept the second relay 14' pulled, so that the internal supply circuit 11' has been kept closed during the entire transition.

The pulsating current, which now flows through the hold circuit 8' from the voltage source 3 via the internal supply circuit 11', together with the capacitor 9' keep the second relay 14' pulled, so that the internal supply circuit 11' is closed.

This implies that the active status of the left flasher lamp 6 has been maintained in the transition from the first state to the second state.

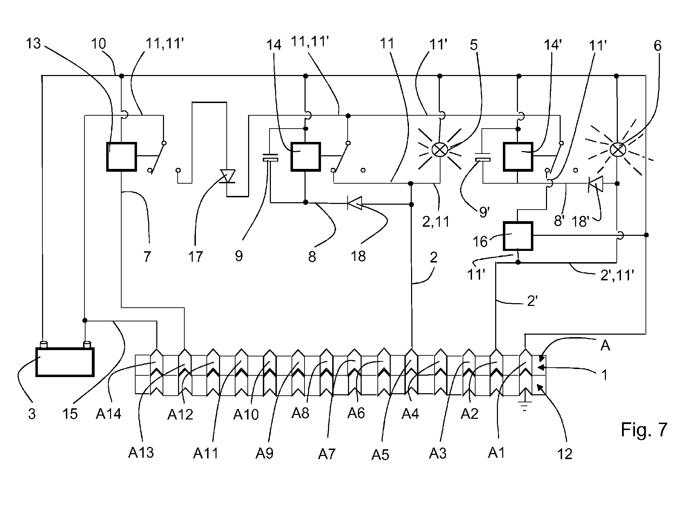

Figure 7 shows the left position lamp 5 with an active status in the first state and the left flasher lamp 6 with an active status in the first state. The plug 12 is connected to the socket 1. A current flows from the electrical system of the towing vehicle to the fifth contact pole A5, and on to the left position lamp 5 via the external supply circuit 2, and a pulsating current flows from the electrical system of the towing vehicle to the second contact pole A2, and on to the left flasher lamp 6, via the external supply circuit 2'.

The first relay 13 keeps the internal supply circuit 11, 11' broken, since a current flows through the status circuit 7 from the battery of the towing vehicle via the thirteenth contact pole A13, said current keeping the first relay 13 in a pulled, open position.

The second relay 14 keeps the internal supply circuit 11 closed to the left position lamp 5, since a current flows through the hold circuit 8 from the electrical system of the towing vehicle via the fifth contact pole, said current keeping the second relay 14 in a pulled, closed position.

The second relay 14' keeps the internal supply circuit 11' closed to the left flasher lamp 6, since a pulsating current flows through the hold circuit 8' from the electrical system of the towing vehicle via the second contact pole A2, said pulsating current together with the capacitor 9' keeping the second relay 14' in a pulled, closed position. The capacitor 9' is charged up by the pulsating current and sees to that the second relay 14' is pulled also between the current pulses. Between the current pulses, the capacitor 9' maintains a voltage across the second relay 14' so that the second relay 14' cannot break the internal supply circuit 11' between the current pulses. It is therefore necessary that the capacitor 9' is adapted to be capable of maintaining a voltage across the second relay 14' for a period of time at least as great as the time between two successive current pulses.

The capacitor 9, 9' is charged up by the current flowing through the hold circuit 8, 8'.

Accordingly, no current flows through the internal supply circuit 11, 11', since the internal supply circuit 11, 11' is broken at the first relay 13.

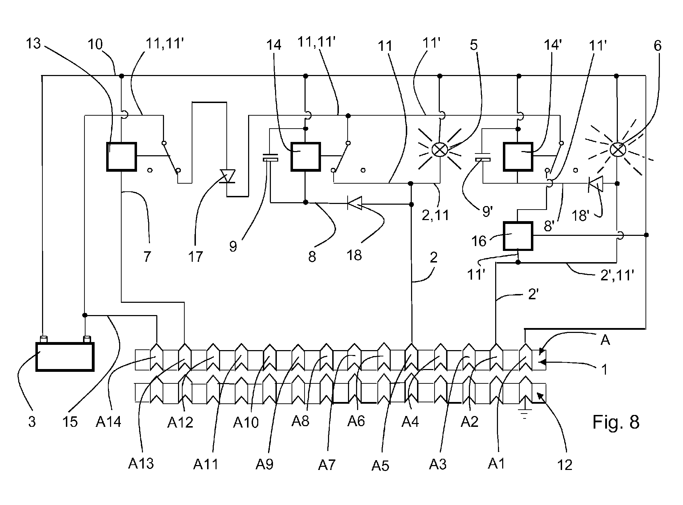

Figure 8 shows the left position lamp 5 and the left flasher lamp 6, according to Figure 7, after a transition to the second state, wherein the active statuses of the left position lamp 5 and the left flasher lamp 6 have been maintained in the transition from the first state to the second state.

Here, the plug 12 has been disconnected from the socket 1 so that no current flows any longer from the electrical system of the towing vehicle to the contact poles A1-A14 of the socket. Since no current flows any longer through the status circuit 7, the first relay 13 has been closed.

Now, a current flows from the voltage source 3, through the internal supply circuit 11, to the left position lamp 5, and supplies the left position lamp 5 with current.

Furthermore, a current now flows from the voltage source 3, through the internal supply circuit 11', to the left flasher lamp 6, and supplies the flasher lamp 6 with a pulsating current. The pulsating current is produced with the flashing relay 16, which is arranged in the internal supply circuit 11'. The current after the flashing relay 16 is pulsating to the hold circuit 8'.

When transitioning from the first state to the second state, the capacitor 9, 9' has kept the second relay 14, 14' pulled, so that the internal supply circuit 11' has been kept closed during the entire transition.

The current that now flows through the hold circuit 8 from the voltage source 3 keeps the second relay pulled, so that the internal supply circuit 11 is closed. The pulsating current that now flows through the hold circuit 8', from the voltage source 3 via the internal supply circuit 11', together with the capacitor 9 keep the second relay 14 pulled, so that the internal supply circuit 11' is closed.

This implies that the active statuses of the left position lamp 5 and the left flasher lamp 6 have been maintained in the transition from the first state to the second state.

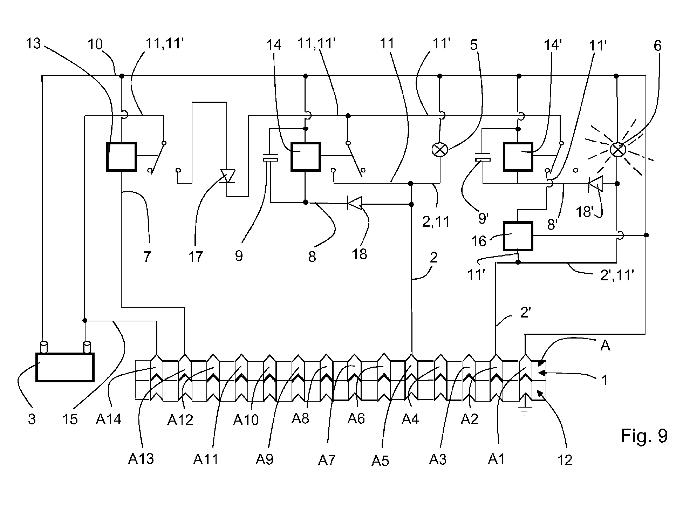

Figure 9 shows the left position lamp 5 with an inactive status in the first state, and the left flasher lamp 6 with an active status in the first state.

The first relay 13 breaks the internal supply circuit 11, 11 in the first state.

The second relay 14 keeps the internal supply circuit 11 broken to the left position lamp 5, since no current flows through the hold circuit 8 from the electrical system of the towing vehicle when the status of the left position lamp 5 is inactive, which causes the second relay 14 to be kept in an open position.

The capacitor 9 is not charged up, since no current flows through the hold circuit 8.

The second relay 14' keeps the internal supply circuit 11' closed to the left flasher lamp 6, since a pulsating current flows through the hold circuit 8', from the electrical system of the towing vehicle via the second contact pole A2, said pulsating current together with the capacitor 9' keeping the second relay 14' in a pulled, closed position. The capacitor 9' is charged up by the pulsating current and sees to that the second relay 14' is pulled also between the current pulses. Between the current pulses, the capacitor 9' maintains a voltage across the second relay 14' so that the second relay 14' cannot break the internal supply circuit 11' between the current pulses. It is therefore necessary that the capacitor 9' is adapted to be capable of maintaining a voltage across the second relay 14' for a period of time at least as great as the time between two successive current pulses.

The capacitor 9' is charged up by the current flowing through the hold circuit 8'.

No current flows through the second voltage circuit 11, 11', since the internal supply circuit 11, 11' is broken at the first relay 13.

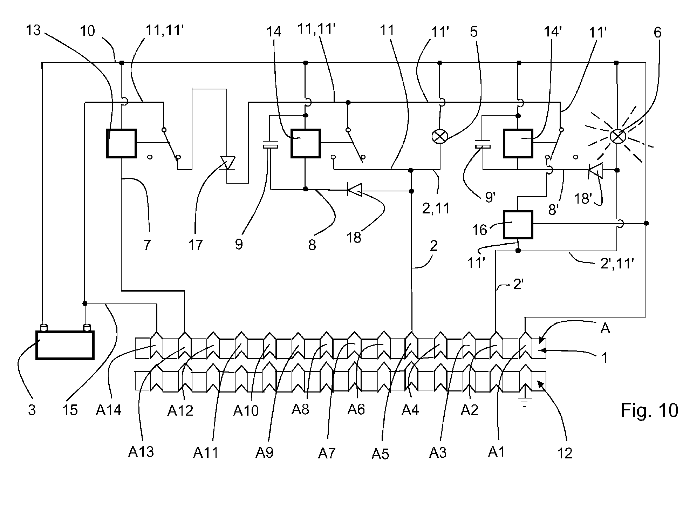

Figure 10 shows the left position lamp 5 and the left flasher lamp 6, according to Figure 9, after a transition to the second state, wherein the prevailing status of the lamps 5, 6 from the first state has been maintained in the transition from the first state to the second state.

The first relay 13 closes the internal supply circuit 11, 11' in the second state.

The second relay 14, which senses that the left position lamp 5 is inactive, is open and breaks the internal supply circuit 11.

The second relay 14', which senses that the left flasher lamp 6 is active, is pulled and keeps the internal supply circuit 11' closed.

The invention has been described based upon a specific embodiment. It is appreciated, however, that other embodiments and variants are possible within the scope of the following claims. It is appreciated that the invention is applicable to all types of light signal devices in a trailer, where the light signal devices have a flashing light or a steady light. Furthermore, other alternative voltage sources, such as for example fuel cells, may be possible.

## Claims

1. A device for controlling a plurality of light signal devices (5, 6) of a trailer, said light signal devices (5, 6) being capable of taking a first state where they are current supplied by an electrical system of a towing vehicle, as well as a second state where they are current supplied by a voltage source (3) of the trailer, wherein each light signal device (5, 6) can have either an active status or an inactive status, the trailer comprises an external supply circuit (2, 2') which, in the first state, connects the respective light signal device (5, 6) to the electrical system of the towing vehicle,
**characterized in that** the device comprises
- a control circuit for each light signal device (5, 6), said control circuit comprises:
- an internal supply circuit (11, 11') which, in the second state, connects the light signal device (5, 6) to the voltage source (3) of the trailer when the light signal device (5, 6) has an active status,
- a status circuit (7) comprising a first relay (13), which keeps the internal supply circuit (11, 11') broken at the first relay (13) in the first state and keeps the internal supply circuit (11, 11') closed at the first relay (13) in the second state, and
- a hold circuit (8, 8') comprising a second relay (14, 14'), which keeps the internal supply circuit (11, 11') closed when the light signal device (5, 6) is active in the second state, and keeps the internal supply circuit (11, 11') broken when the light signal device (5, 6) is inactive,
such that each control circuit is adapted to detect the status of the light signal device (5, 6) in the first state and to maintain the status of the light signal device (5, 6) when the light signal device (5, 6) transitions from the first state to the second state.

2. The device according to claim 1, **characterized in that** the internal supply circuit (11, 11') comprises a first blocking diode (17, 17').

3. The device according to any one of claims 1-2, **characterized in that** the hold circuit (8, 8') comprises a capacitor (9, 9') which is arranged in parallel with the second relay (14, 14').

4. The device according to claim 3, **characterized in that** the hold circuit (8, 8') comprises a second blocking diode (18, 18').

5. The device according to any one of the claims 1-4, **characterized in that** the internal supply circuit (11') comprises a flashing relay (16) wherein the internal supply circuit (11') connects to a light signal device (6) which flashes when it is active.

## Patentansprüche

1. Vorrichtung zum Steuern einer Vielzahl von Lichtsignalvorrichtungen (5, 6) eines Anhängers, wobei die Lichtsignalvorrichtungen (5, 6) in der Lage sind, einen ersten Zustand, in dem sie von einer elektrischen Anlage eines Zugfahrzeugs mit Strom versorgt werden, sowie einen zweiten Zustand, in dem sie von einer Spannungsquelle (3) des Anhängers mit Strom versorgt werden, einzunehmen, wobei jede Lichtsignalvorrichtung (5, 6) entweder einen aktiven Status oder einen inaktiven Status haben kann, wobei der Anhänger eine externe Versorgungsschaltung (2, 2') umfasst, die in dem ersten Zustand die jeweilige Lichtsignalvorrichtung (5, 6) mit der elektrischen Anlage des Zugfahrzeugs verbindet,
**dadurch gekennzeichnet, dass** die Vorrichtung Folgendes umfasst:
- eine Steuerschaltung für jede Lichtsignalvorrichtung (5, 6), wobei die Steuerschaltung Folgendes umfasst:
- eine interne Versorgungsschaltung (11, 11'), die in dem zweiten Zustand die Lichtsignalvorrichtung (5, 6) mit der Spannungsquelle (3) des Anhängers verbindet, wenn die Lichtsignalvorrichtung (5, 6) einen aktiven Status aufweist,
- eine Statusschaltung (7), die ein erstes Relais (13) umfasst, das die interne Versorgungsschaltung (11, 11') an dem ersten Relais (13) in dem ersten Zustand offen hält und die interne Versorgungsschaltung (11, 11') an dem ersten Relais (13) in dem zweiten Zustand geschlossen hält, und
- eine Halteschaltung (8, 8'), die ein zweites Relais (14, 14') umfasst, das die interne Versorgungsschaltung (11, 11') geschlossen hält, wenn die Lichtsignalvorrichtung (5, 6) in dem zweiten Zustand aktiv ist, und die interne Versorgungsschaltung (11, 11') offen hält, wenn die Lichtsignalvorrichtung (5, 6) inaktiv ist,
so dass jede Steuerschaltung geeignet ist, um den Status der Lichtsignalvorrichtung (5, 6) in dem ersten Zustand zu erkennen und um den Status der Lichtsignalvorrichtung (5, 6) zu bewahren, wenn die Lichtsignalvorrichtung (5, 6) von dem ersten Zustand in den zweiten Zustand übergeht.

2. Vorrichtung nach Anspruch 1, **dadurch gekennzeichnet, dass** die interne Versorgungsschaltung (11, 11') eine erste Sperrdiode (17, 17') umfasst.

3. Vorrichtung nach einem der Ansprüche 1 bis 2, **dadurch gekennzeichnet, dass** die Halteschaltung (8, 8') einen Kondensator (9, 9') umfasst, der parallel zu dem zweiten Relais (14, 14') angeordnet ist.

4. Vorrichtung nach Anspruch 3, **dadurch gekennzeichnet, dass** die Halteschaltung (8, 8') eine zweite Sperrdiode (18, 18') umfasst.

5. Vorrichtung nach einem der Ansprüche 1 bis 4, **dadurch gekennzeichnet, dass** die interne Versorgungsschaltung (11') ein Blinkrelais (16) umfasst, wobei die interne Versorgungsschaltung (11') an eine Lichtsignalvorrichtung (6) angeschlossen ist, die blinkt, wenn sie aktiv ist.

## Revendications

1. Dispositif pour commander une pluralité de dispositifs (5, 6) de signalisa-tion lumineuse d'une remorque, lesdits dispositifs (5, 6) de signalisation lumi-neuse étant aptes à adopter un premier état dans lequel ils sont alimentés en courant électrique par un système électrique d'un véhicule tracteur, ainsi qu'un deuxième état dans lequel ils sont alimentés en courant par une source d'alimentation (3) de la remorque, chaque dispositif (5, 6) de signalisation lumi-neuse pouvant avoir un état actif ou un état inactif, la remorque comprenant un circuit d'alimentation externe (2, 2') qui, dans le premier état, connecte le disposi-tif (5, 6) de signalisation lumineuse respectif au système électrique du véhicule tracteur,
**caractérisé en ce que** le dispositif comprend :
- un circuit de commande pour chaque dispositif (5, 6) de signalisation lumi-neuse, ledit circuit de commande comprenant :
- un circuit d'alimentation interne (11, 11') qui, dans le deuxième état, connecte le dispositif (5, 6) de signalisation lumineuse à la source d'alimentation (3) de la re-morque lorsque le dispositif (5, 6) de signalisation lumineuse est à l'état actif,
- un circuit d'état (7) comprenant un premier relais (13), qui maintient le circuit d'alimentation interne (11, 11') ouvert au niveau du premier relais (13) dans le premier état et maintient le circuit d'alimentation interne (11, 11') fermé au niveau du premier relais (13) dans le deuxième état, et
- un circuit de maintien (8, 8') comprenant un second relais (14, 14'), qui main-tient le circuit d'alimentation interne (11, 11') fermé lorsque le dispositif (5, 6) de signalisation lumineuse est actif dans le deuxième état, et maintient le circuit d'alimentation interne (11, 11') ouvert lorsque le dispositif (5, 6) de signalisation lumineuse est inactif,
de telle sorte que chaque circuit de commande est conçu pour détecter l'état du dispositif (5, 6) de signalisation lumineuse dans le premier état et maintenir l'état du dispositif (5, 6) de signalisation lumineuse lorsque le dispositif (5, 6) de signa-lisation lumineuse passe du premier état au deuxième état.

2. Dispositif selon la revendication 1, **caractérisé en ce que** le circuit d'alimentation interne (11, 11') comprend une première diode de blo-cage (17, 17').

3. Dispositif selon l'une quelconque des revendications 1 à 2, **caractérisé en ce que** le circuit de maintien (8, 8') comprend un condensateur (9, 9') disposé en parallèle par rapport au second relais (14, 14').

4. Dispositif selon la revendication 3, **caractérisé en ce que** le circuit de maintien (8, 8') comprend une seconde diode de blocage (18, 18').

5. Dispositif selon l'une quelconque des revendications 1 à 4, **caractérisé en ce que** le circuit d'alimentation interne (11') comprend un relais de clignote-ment (16), le circuit d'alimentation interne (11') assurant une connexion à un dis-positif (6) de signalisation lumineuse qui clignote lorsqu'il est actif.
